# EUROPEAN PATENT APPLICATION

(11) **EP 4 043 657 A1**
(43) Date of publication of application: **17.08.2022**
(21) Application number: 21189452.2
(22) Date of filing: 03.08.2021
(51) Int. Cl.: E04B 1/26, F16B 5/02, F16B 19/02, F16B 25/00, E04B 2/74, E04B 2/82, B25B 27/00, B25B 15/00, B25B 23/00, B25B 31/00, F16B 37/14

(54) **FASTENER SLEEVE, SYSTEM AND INSTALLATION METHOD**

(30) Priority: 03.08.2020 US 202063060223 P; 07.07.2021 US 202117369137
(71) Applicant: Simpson Strong-Tie Company, Inc., Pleasanton, CA 94588 (US)
(72) Inventor: BRIGHAM, Gueary Andrew, Nashville (US); PARK, Jeremy Scott, Gallatin (US); HALE, Troy, Goodlettsville (US); TILLINGHAST, Adam, Nashville (US)
(74) Representative: Boult Wade Tennant LLP

(57) **Abstract**

Disclosed are systems, devices and methods used in construction to secure one component, such as a header, to another component, such as a joist, while controlling spacing. Fasteners are used with a removable sleeve member having longitudinal ribs to secure the fastening assembly and prevent movement. An installation guide is provided that facilitates both flush and offset installation.

## Description

### CROSS-REFERENCE

This application claims the benefit of U.S. Provisional Application No. 63/060,223, filed August 3, 2020, entitled *Systems, Devices and Methods for Securing Non-Load Bearing Walls,* which application is incorporated herein in its entirety by reference.

### BACKGROUND

The disclosure relates to systems, devices and methods used in construction to secure one component, such as a header, to another component, such as a joist, while controlling spacing.

As is known to those of skill in the art, interior non-load bearing walls are typically framed below load bearing components with a space between the components. The gap enables the load bearing components to deflect under the pre-designed loads. Without the space, e.g., if the components are flush, components meant to be non-load bearing become load-bearing or quasi-load bearing which could result in loads being transferred to structural components not designed to support loads.

Additionally, construction of wood framed buildings has become generally standardized with the introduction of pre-fabricated roof trusses and I-joist roof and floor systems. These systems allow carpenters to assemble pre-manufactured structural components to the structure using hardware designed to address the deflection needed for optimal performance of each assembly.

Wall hanging hardware that accommodates deflection has been designed and installed in many different ways with mixed results in use. Installation results can be negatively impacted when, for example, the hardware is too tight. Overbuilding of blocking systems for fastening and fastening horizontally into the laminations can also negatively impact the installation results. Additionally, a "silent floor" may not be silent at all after installation causing creaking and squeaking as one walks on the floor and the floor flexes.

An exemplar fastener is the Deflector SP available at www.fastcap.com. The product is an integrated system with a fastener and an integrated sleeve. In use, the combination of a fastener with a sleeve helps to eliminate squeaking floors, failures in I-joists from unblocked non-bearing wall lines, stress cracks in drywall, door compression and adjustment, uneven floors and noise transfer. An exemplar offset is the Deflector Offset which can be used during the installation process with the Deflector SP.

What is needed are fastener assemblies suitable for securing one component to another where the sleeve is removable prior to installation but securely engages the fastener after installation. An easily convertible installation guide which facilitates flush and offset installation is also desirable. Additionally, what is also needed are fastener assemblies suitable for use in a variety of applications. Applications include connecting a first material to a second material where the materials connected are, for example, wood, cold-formed steel ("CFS"), and concrete.

### SUMMARY

Disclosed are fastener assemblies suitable for securing one component to another where the sleeve is removable from the fastener. Also disclosed are fastener assemblies suitable for use in a variety of applications connecting a first material to a second material, where the materials can be selected from, for example, wood, CFS, and concrete. More specifically, for wood-to-wood, CFS-to-wood, and wood-to-concrete connections. Also disclosed is an installation guide which facilitates flush and offset installation.

An aspect of the disclosure is directed to fastener sleeves comprising a sleeve length from a proximal end to a distal end wherein the fastener sleeve defines a bore for removably receiving a fastener and further wherein the fastener sleeve can have one or more tapered longitudinal ribs on an exterior surface and the one or more tapered longitudinal ribs terminate prior to the distal end of the fastener sleeve. Embodiments of the fastener sleeve can have at least one of a tapered interior diameter and a tapered exterior diameter. Additionally, the fastener sleeve can have one or more distal slits. In some configurations, the one or more distal slits can have a slit length less than the fastener sleeve length. The distal end of the fastener sleeve can be operable to flex radially outward from a central axis. Additionally, the fastener sleeve can have a proximal flange. In some configurations, the proximal flange of the fastener sleeve can have a recess on a proximal surface operable to receive a fastener head. A proximal sleeve body recess can also be provided between a proximal end of the one or more ribs and a lower surface of the proximal flange.

Another aspect of the disclosure is directed to fastener sleeves comprising a sleeve length from a proximal end to a distal end wherein the fastener sleeve defines a bore for removably receiving a fastener and further wherein the fastener sleeve can have an integrally formed proximal flange and one or more distal slits. Embodiments of the fastener sleeve can have at least one of a tapered interior diameter and a tapered exterior diameter. Additionally, the fastener sleeve can have one or more distal slits. In some configurations, the one or more distal slits can have a slit length less than the fastener sleeve length. The distal end of the fastener sleeve can be operable to flex radially outward from a central axis. Additionally, the fastener sleeve can have a proximal flange. In some configurations, the proximal flange of the fastener sleeve can have a recess on a proximal surface operable to receive a fastener head. A proximal sleeve body recess can also be provided between a proximal end of the one or more ribs and a lower surface of the proximal flange. The fastener sleeves can have at least one of a tapered interior diameter and a tapered exterior diameter. Additionally, the fastener sleeves can further comprise one or more longitudinal ribs having a tapered depth along a length of the one or more longitudinal ribs. The one or more distal slits can have a slit length less than the fastener sleeve length. In at least some configurations, the distal end of the fastener sleeves can be operable to flex radially outward from a central axis. The proximal flange can also have a recess on a proximal surface operable to receive a fastener head. A proximal sleeve body recess can also be provided between a proximal end of the one or more ribs and a lower surface of the proximal flange.

Still another aspect of the disclosure is directed to fastener assemblies. Suitable fastener assemblies comprise: a fastener; and a fastener sleeve with a sleeve length from a proximal end to a distal end wherein the fastener sleeve defines a bore for removably receiving a fastener and further wherein the fastener sleeve can have one or more tapered longitudinal ribs on an exterior surface and the one or more tapered longitudinal ribs terminate prior to the distal end of the fastener sleeve. The fastener sleeve of the fastener assembly can have at least one of a tapered interior diameter and a tapered exterior diameter. Additionally, the fastener sleeve of the fastener assembly can have one or more distal slits. The one or more distal slits of the fastener sleeve can have a slit length less than the fastener sleeve length. The distal end of the fastener sleeve can also be operable to flex radially outward from a central axis. The fastener sleeve can have a proximal flange, and the proximal flange of the fastener sleeve can also have a recess on a proximal surface operable to receive a fastener head. The fastener sleeve can further comprise a proximal sleeve body recess between a proximal end of the one or more ribs and a lower surface of the proximal flange.

Yet another aspect of the disclosure is directed to fastener assemblies comprising: a fastener; and a fastener sleeve with a sleeve length from a proximal end to a distal end wherein the fastener sleeve defines a bore for removably receiving a fastener and further wherein the fastener sleeve can have an integrally formed proximal flange and one or more distal slits. The fastener sleeve of the fastener assembly can have at least one of a tapered interior diameter and a tapered exterior diameter. In some configurations, the fastener sleeve further comprises one or more longitudinal ribs having a tapered depth along a length of the one or more longitudinal ribs. Additionally, the one or more distal slits can have a slit length less than the fastener sleeve length. The distal end of the fastener sleeve can also be operable to flex radially outward from a central axis. The proximal flange can also have a recess on a proximal surface operable to receive a fastener head. In some configurations, the fastener sleeve further comprises a proximal sleeve body recess between a proximal end of the one or more ribs and a lower surface of the proximal flange.

Another aspect of the disclosure is directed to installation methods. Installation methods can include the steps of: providing a fastener assembly comprising a fastener having a fastener head and a threaded shaft, and a removable fastener sleeve; extending the fastener sleeve member of the fastener assembly through a hole in a target surface; and driving the threaded shaft of the fastener into the target surface while also setting a spacing gap, whereby the threaded fastener can be anchored in the target surface, and the spacing gap accommodates a deflection of the target surface. A flange at a proximal end of the fastener sleeve can be larger in diameter than a hole in a target surface. The methods can also include the step of providing an installation guide with a bit for engaging and rotating the fastener head, wherein the installation guide can have an axially aligned receptacle dimensioned to releasably retain the fastener assembly to provide a known depth to achieve at least one of a flush installation of the fastener assembly and an offset installation of the fastener assembly. The fastener assembly can be installed through a hole from below, and the fastener is threaded into a floor joist or a roof truss. The fastener can also have a length greater than a length of the fastener sleeve. In some methods, the fastener can translate within the fastener sleeve member to accommodate a vertical deflection. Additionally, the fastener sleeve can translate within a hole to accommodate deflection without loading a wall section. The methods can also include the step of providing a mounting clip for a ceiling panel installed adjacent to a wall section, wherein the mounting clip can be secured to an edge portion of the ceiling panel and spaced about a perimeter of the ceiling panel. Another method of the embodiment can include the step of securing the mounting clip to a top header of the wall section wherein the mounting clip can be being free of attachment to a floor joists or a roof truss. The methods may also include the step of forming a hole through a target surface.

Still another aspect of the disclosure is directed to a system comprising: a fastener; a fastener sleeve having a sleeve length from a proximal end to a distal end wherein the fastener sleeve defines a bore for removably receiving the fastener and further wherein the fastener sleeve can have one or more longitudinal ribs on an exterior surface; a bit having an e-clip; and an installation guide operable to securely receive a bit through a central aperture wherein the installation guide can have a first configuration for an offset installation and a second configuration for a flush installation. The fastener sleeve can have at least one of a tapered interior diameter and a tapered exterior diameter. In some configurations, the one or more longitudinal ribs of the fastener sleeve have a tapered depth along a length of the one or more longitudinal ribs. Additionally, the one or more longitudinal ribs may terminate prior to the distal end of the fastener sleeve. The fastener sleeve can also have one or more distal slits. The one or more distal slits can also have a slit length less than the fastener sleeve length. The distal end of the fastener sleeve can also be operable to flex radially outward from a central axis. In some configurations, the fastener sleeve can have a proximal flange. The proximal flange can also have a recess on a proximal surface operable to receive a fastener head. A proximal sleeve body recess can also be provided between a proximal end of the one or more ribs and a lower surface of the proximal flange. Additionally, the installation guide can have a plurality of external ribs and a distal cavity.

Another aspect of the disclosure is directed to kits comprising: a fastener; a fastener sleeve having a sleeve length from a proximal end to a distal end wherein the fastener sleeve defines a bore for removably receiving the fastener further wherein the sleeve can have one or more tapered longitudinal ribs on an exterior surface and the one or more tapered longitudinal ribs terminate prior to the distal end of the sleeve; a bit having an e-clip; and an installation guide operable to securely receive a bit through a central aperture wherein the installation guide can have a first configuration for an offset installation and a second configuration for a flush installation.

Still another aspect of the disclosure is directed to kits comprising: a fastener; a fastener sleeve with a sleeve length from a proximal end to a distal end wherein the fastener sleeve defines a bore for removably receiving a fastener and further wherein the fastener sleeve can have an integrally formed proximal flange and one or more distal slits; a bit having an e-clip; and an installation guide operable to securely receive a bit through a central aperture wherein the installation guide can have a first configuration for an offset installation and a second configuration for a flush installation.

Another aspect of the disclosure is directed to a method for installing a wall section having a vertical wall stud and a top header extending along the top end of the wall section, in a frame structure having a plurality of floor joists or roof trusses extending above the wall section, the method includes the steps of: providing a plurality of fastener assemblies, each fastener assembly having a threaded fastener extending through a fastener sleeve, the fastener sleeve having at least one of one or more external ribs and one or more distal slits; forming a plurality of holes extending vertically through the top header of the wall section, each hole being generally aligned with one of the floor joists or roof trusses; extending the sleeve member of one of the fastener assemblies vertically and slidably through one of the holes and through the top header of the wall section; and driving the respective threaded fastener through the sleeve member into the aligned floor joist or roof truss to achieve a spacing gap between the floor joist or roof truss and the top header of the wall section, whereby the threaded fastener is anchored in the floor joist or roof truss and the wall section is supported, and the spacing gap accommodates vertical deflection of the frame structure without impinging on and loading the wall section.

### INCORPORATION BY REFERENCE

All publications, patents, and patent applications mentioned in this specification are herein incorporated by reference to the same extent as if each individual publication, patent, or patent application was specifically and individually indicated to be incorporated by reference.
DE 8715882 U1 published 2/25/1988by Schuffenhauer;
EP 1972799 A1 published 9/24/2008 by Huang;
ES 1050526 published 8/1/2002 by Kao;
GB 1498838 published 1/25/1978 by Huck;
GB 2109433A published 6/2/1983 by Slater;
GB 2385398A published 8/20/2003 by Klippel;
US 1,683,796A published 9/11/1928 by Pearce;
US 2,940,488A published 6/14/1960 by Riley Jr.;
US 3,260,544A published 7/12/1966 by Hathaway Jr.;
US 3,881,293A published 5/6/1975 by Conville;
US 4,370082A published 1/25/1983 by Sundberg;
US 4,416,572A published 11/22/1983 by Black;
US 4,801,230A published 1/31/1989 by Wilburn;
US 5,906,080A published 5/25/1999 by diGirolamo et al.;
US 6,868,757B2 published 3/22/2005 by Hufnagl et al.;
US 6,942,439B2 published 9/13/2005 by Rouger;
US 7,387,054B2 published 6/17/2008 by Rajotte;
US 8,458,972B1 published 6/11/2013 by Stodola et al.;
US 9,360,032B2 published 6/7/2016 by Dicaire;
US D379,578S published 6/3/1997 by Daniels;
US 10,145,404B2 published 12/4/2018 by Shadwell;
US 10,150,206B2 published 12/11/2018 by Ko;
US 10,590,978B2 published 3/17/2020 by Shadwell;
US 2006/0067803A1 published 3/30/2006 by Hsu;
US 2007/0122253A1 published 5/31/2007 by Murtha;
US 2007/0258787A1 published 11/8/2007 by Hsu;
US 2014/0360123A1 published 12/11/2014 by Dicaire;
US 2016/0279769A1 published 9/29/2016 by Arslan;
US 2017/0218996A1 published 8/3/2017 by Takeda et al.;
US 2019/0127974A1 published 5/2/2019 by Dicaire et al.;
WO 2016/205119A1 published 12/22/2016 by Kennelly;
FASTCAP DEFLECTOR FASTENER product information (accessed 5/2020); and
FASTCAP DEFLECTOR OFFSET TOOL product information (accessed 5/2020).

### BRIEF DESCRIPTION OF THE DRAWINGS

The novel features of the invention are set forth with particularity in the appended claims. A better understanding of the features and advantages of the present invention will be obtained by reference to the following detailed description that sets forth illustrative embodiments, in which the principles of the invention are utilized, and the accompanying drawings of which:

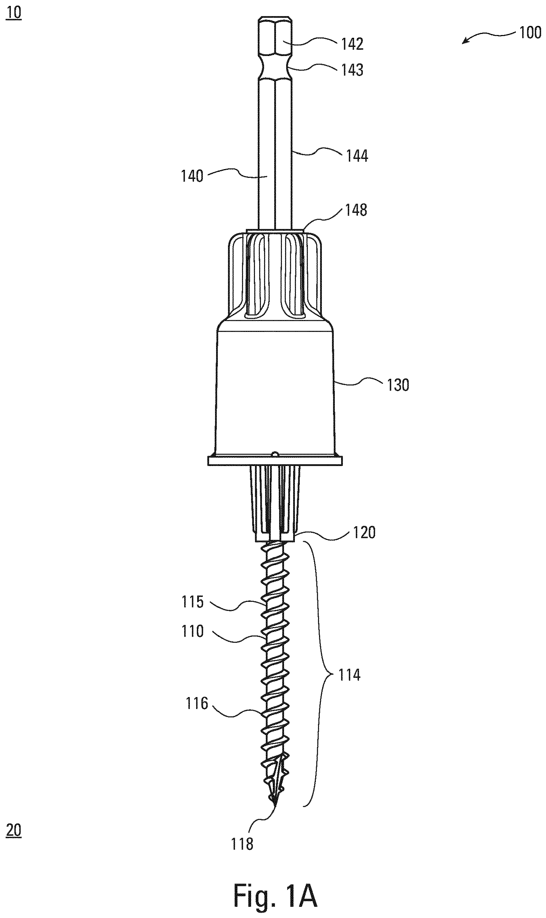

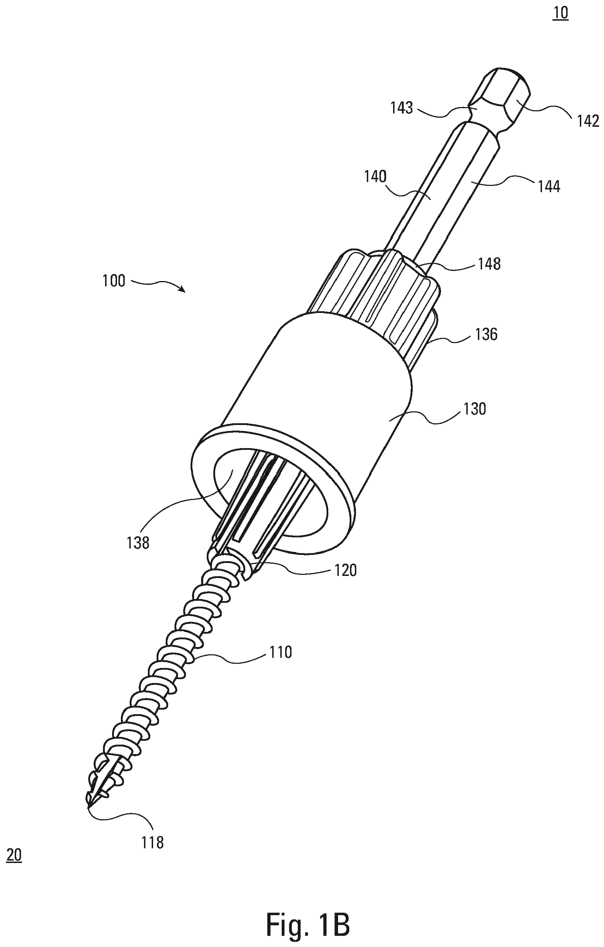

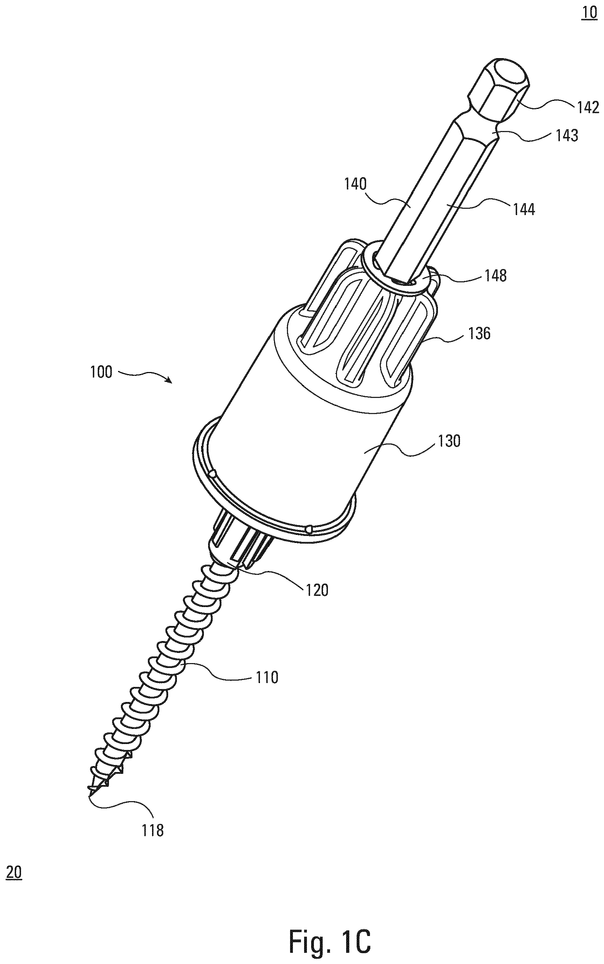

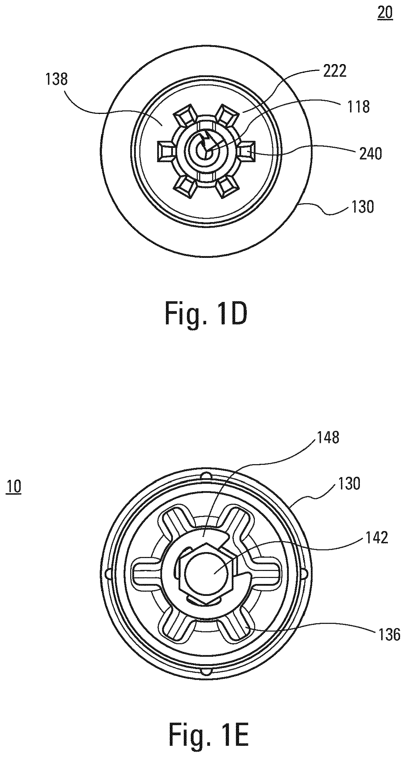

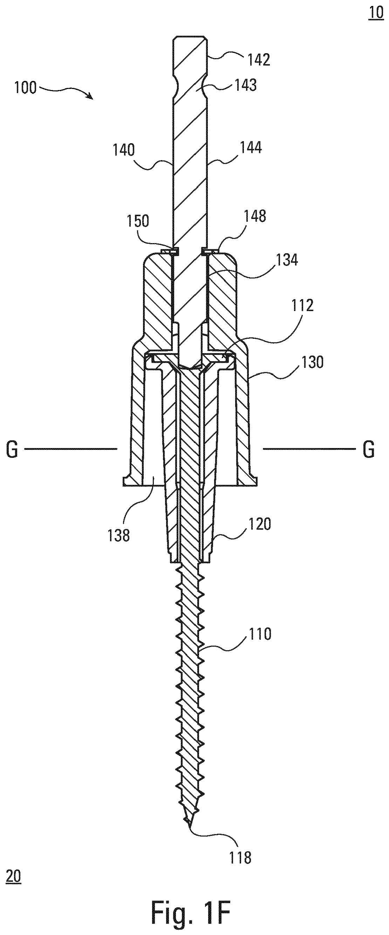

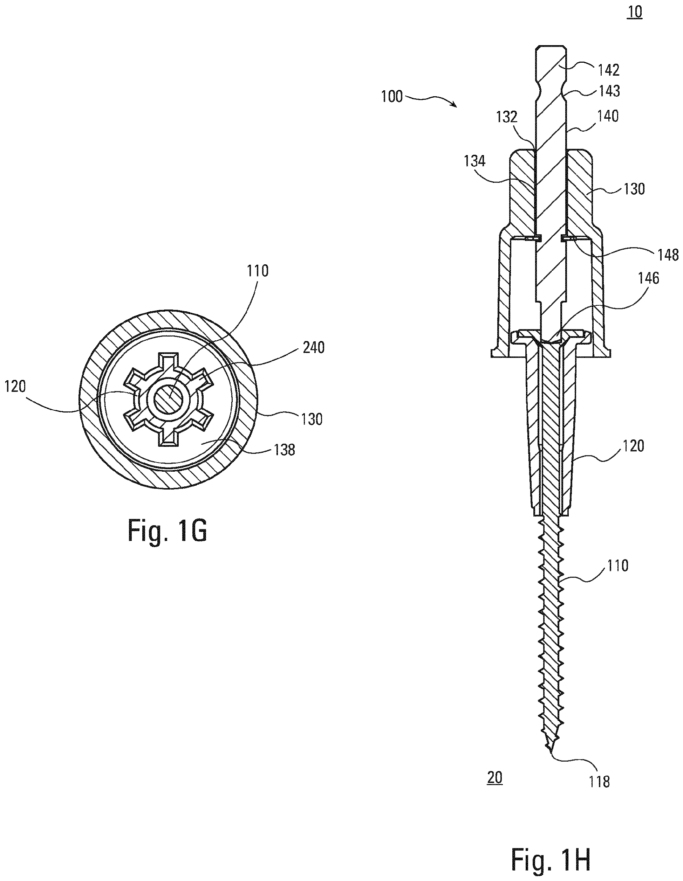

**FIGS. 1A-H** illustrates the system including a fastener, a sleeve, an installation guide, and a bit; **FIG. 1A** is a side view, **FIG. 1B** is a first perspective view; **FIG. 1C** is a second perspective view; **FIG. ID** is a view from the distal end; **FIG. IE** is a view from the proximal end; **FIG. IF** is a cross-sectional view along a first axis with the installation guide in an offset position; **FIG. 1G** is a cross-sectional view along a second axis, perpendicular to the first action at approximately G-G shown in **FIG. IF;** **FIG. 1H** illustrates a cross-section with the installation guide in a flush position;
**FIGS. 2A-G** illustrate a sleeve; **FIG. 2A** is a side-view of the sleeve; **FIG. 2B** is a first perspective view of the sleeve; **FIG. 2C** is a second perspective view of the sleeve; **FIG. 2D** is a view of the sleeve from the distal end; **FIG. 2E** is a view of the sleeve from the proximal end; **FIG. 2F** is a cross-sectional view along the lines **F-F** in **FIG. 2A****;** **FIG. 2G** is a cross-sectional view along the lines **G-G** in **FIG. 2A****;**
**FIGS. 3A-B** is a side view and a cross-sectional view of a sleeve similar to the sleeve show in **FIGS. 2A-G** except that a recess is provided;
**FIGS. 4A-B** illustrates the sleeve of **FIG. 2** with a fastener; **FIG. 4A** is a side view of the sleeve with the fastener; **FIG. 4B** is a cross-sectional view of the sleeve with the fastener;
**FIGS. 5A-B** illustrates the sleeve from **FIG. 3** with a fastener; **FIG. 5A** is a side view of the sleeve with the fastener; **FIG. 5B** is a cross-sectional view of the sleeve with the fastener;
**FIG. 6** illustrates use of the system to install a fastener and a sleeve to connect a first wood element to a second wood element in flush installation; and
**FIG. 7** illustrates use of the system to install a fastener and a sleeve to connect a first wood element to a second wood element in an offset installation; and
**FIGS. 8A-C** illustrate various installations of a fastener and a sleeve.

### DETAILED DESCRIPTION

### I. SYSTEMS

**FIGS. 1A-H** illustrates a fastener installation system **100** including a fastener **110** (such as a tapping screw), a sleeve **120,** an installation guide **130,** and a bit **140.** The combination of the fastener 110 and the sleeve **120** form a fastener assembly. The fastener installation system can be used with a suitable driver, such as a heavy-duty hand tool. Suitable heavy duty tools include, for example, power drills. A length extending adaptor can also be used as part of the system. The length-extending adaptor can be a fixed length-extending adaptor or a telescoping length-extending adapter. The total length can vary depending on the application. A suitable length-extending adapter can be, for example, an 18" Deflector Extension that allows for installation of fastener assemblies from floor level.

Turning to **FIG. 1A****,** a side view of the fastener installation system **100** is illustrated. The distal end **20** of the fastener **110** tapers into a point **118.** A threaded shaft **114** of the fastener **110** is shown extending from the distal end **20** of the sleeve **120.** The threaded shaft **114** of the fastener **110** has threads **116** that extend from a fastener surface **115.** As is known in the art, a major diameter for the fastener **110** is measured from the crest or top of the thread **116** on opposing sides of the fastener **110** at a proximal position near the shank (where the diameter is the greatest), and a minor diameter is measured from the thread valley or bottom of the thread **116** on opposing sides of the fastener **110** at a distal position near the point **118** or tip (where the diameter is the smallest). The head of the fastener **110** and the unthreaded shaft or shank are positioned below the installation guide **130.** As will be appreciated by those skilled in the art, the length of the fastener **110** can vary depending on the installation needs and the shape of the fastener bit interface **111** can vary depending on the type of bit **140** used without departing from the scope of the disclosure. Additionally, the major diameter of the fastener **110,** the minor diameter of the fastener **110,** the length of an unthreaded shaft **113,** and the threaded shaft **114,** can also change depending on the installation needs without departing from the scope of the disclosure.

**FIG.** 1B is a first perspective view from a distal **20** orientation and **FIG. 1C** is a second perspective view from a proximal **10** orientation, where the distal end **20** is farthest from the user and the proximal end **10** is closest to the user. The installation guide **130** has a guide aperture **132** (shown in **FIG. 1H****),** a channel **134** (shown in **FIG. IF),** a plurality of external guide member ribs **136** and a cavity **138** for receiving the sleeve **120** and the fastener **110.** The installation guide **130** can have a length from a proximal end **10** to a distal end **20** of about 1.74 cm. The length of the guide aperture **132** can be about 0.725 cm. The interior depth of the installation guide cavity **138** can be about 1.02 cm. The wall thickness of the installation guide cavity **138** can be about 0.10 cm. The width of the installation guide aperture **132** is sized and shaped to securely engage the bit **140** and can have a width of about 0.25 cm. Additionally, the shape of the installation guide aperture **132** can be hexagonal to match the exterior shape of the bit **140.** Other shapes can be used without departing from the scope of the disclosure.

A proximal end **10** of the bit **140** is shown with the hex shank **142,** a ball groove **143** or neck and a bit body **144.** The hex shank **142** of the bit **140** is operable to engage a chuck of, for example, a power screwdriver during use. An e-clip **148** is provided which fits within a recess on the surface of the bit body **144.** The e-clip **148** allows the bit to engage the installation guide **130** in a first orientation for flush installation and a second orientation for recessed installation by changing how the bit **140** engages the installation guide **130,** as discussed below. The bit **140** can have an overall length from a proximal end **10** to a distal end **20** of 2.50 cm. An e-clip groove **150** is provided along the length of the bit **140** to securely receive the e-clip **148.** The e-clip groove **150** is positioned 1.60 cm from the proximal end **10** of the bit **140.**

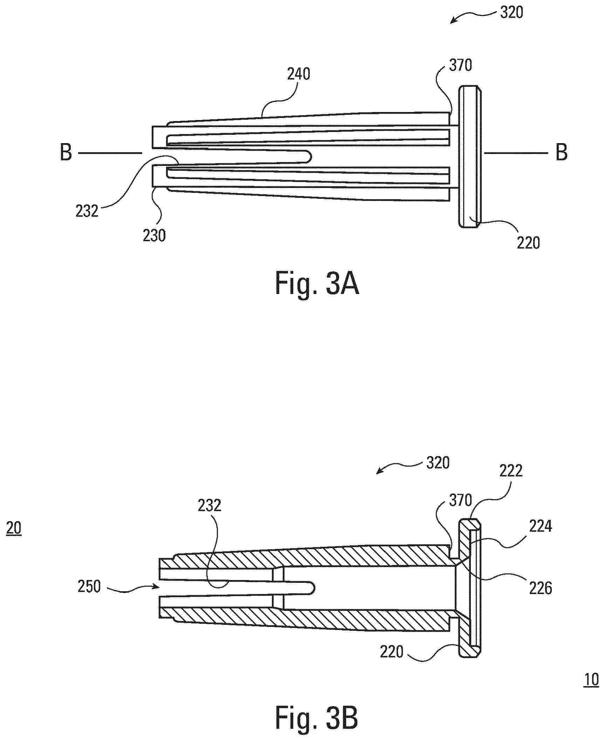

**FIG. ID** is an end view of the fastener installation system **100** from the distal end **20** with the flange **220,** or shoulder, of a sleeve **120** positioned within a cavity **138** of the installation guide **130,** and the tip **118** of the fastener **110** having a smaller diameter than the sleeve body **230.** Ribs **240** of the sleeve **120** are shown. As will be appreciated by those skilled in the art, the sleeve **320** of **FIG. 3** would have a similar appearance.

**FIG. IE** an end view of the fastener installation system **100** from the proximal end **10.** From this view, the proximal end of the hex shank **142** of the bit is shown along with the e-clip **148.** The e-clip **148** is positioned against the installation guide **130** with the external guide member ribs **136** visible.

**FIG. IF** is a cross-sectional view along a first longitudinal axis with the installation guide **130** in an offset installation configuration. The offset installation configuration is achieved when the e-clip **148,** securely nested within the e-clip groove **150** of the bit **140,** is positioned adjacent the surface at the proximal end **10** of the installation guide **130** when the bit **140** is located within the channel **134** of the installation guide **130.** The fastener **110** and sleeve **120** are positioned within a recess **138** of the installation guide **130.**

**FIG. 1G** is a cross-sectional view along a second axis, perpendicular to the first longitudinal axis, at **G-G** in **FIG. IF.** A cross-section of the fastener **110** is shown within a central opening of the sleeve. A plurality of ribs **240** (illustrated as six ribs) is positioned within a guide channel **134.** **FIG. 1H** illustrates a cross-section along the first longitudinal axis with the installation guide **130** in a flush configuration with the secured e-clip **148** positioned within an interior cavity of the installation guide **130.**

The bit **140** can removably engage the installation guide **130,** so that the installation guide **130** can quickly and easily toggle between an offset drive installation position (as shown in **FIG. IF)** and a flush drive installation position (as shown in **FIG. 1H****)** by changing the relative position of the secured e-clip **148** to the installation guide **130.** As will be appreciated by those skilled in the art, the position of the e-clip **148** does not change. Thus, for the offset drive position shown in **FIG. IF,** the distal end **20** of the bit **140** is inserted into the proximal end **10** of the channel **134** of the installation guide **130.** For the flush drive position shown in **FIG. 1H****,** the proximal end **10** of the bit **140** is inserted into distal end **20** of the channel **134** of the installation guide **130** through the cavity **138.**

### II. SLEEVES AND FASTENERS

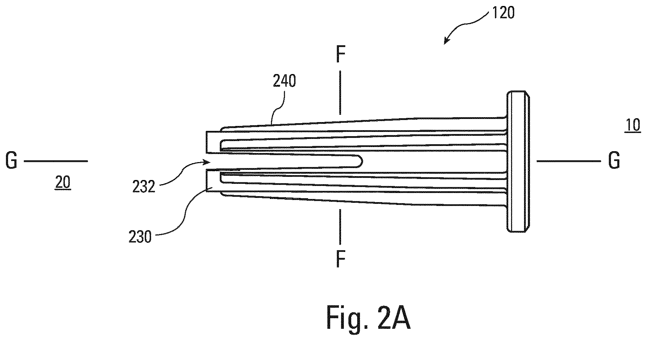

**FIGS. 2A-G** illustrate a sleeve **120** for use in, for example, a wood application. **FIG. 2A** is a side-view of the sleeve **120.** The sleeve **120** has a flange **222** or shoulder at a proximal end **10** connected to a sleeve body **230.** The flange **222** can be integrally formed with the body of the sleeve **120.** The sleeve **120** is configurable to taper in either or both of its internal diameter (i.e. the diameter of the bore **250)** and its external diameter (i.e., diameter of the sleeve body **230)** from the proximal end **10** to its distal end **20.** The internal diameter of the bore **250** at the proximal end **10** is the same or greater than the major diameter of the fastener **110.** The internal diameter of the bore **250** at the distal end **20** is the same or less than the major diameter of the fastener **110.** Where the internal diameter of the bore **250** is less than the major diameter of the fastener **110,** the longitudinal slit **232** or slot enables the distal end **20** of the sleeve body **230** to radially flex away from a central longitudinal axis of the sleeve **120** to temporarily facilitate a greater distal diameter of the sleeve **120** or towards a central longitudinal axis to reduce the distal diameter of the sleeve, thus allowing the sleeve **120** to flexibly and removably engage the fastener **110.** The sleeve **120** can be rigid along the length of the sleeve body **230,** flexible along the sleeve body **230** or have a rigid proximal section and a flexible distal section.

One or more longitudinal slits **232** are provided which extend from a distal end **20** partway along the length of the sleeve body **230.** The length of the longitudinal slits **232** can, for example, be from 25% to 75% of the overall length of the sleeve **110.** Where there is more than one longitudinal slit **232,** the length of each longitudinal slit **232** can be the same.

One or more ribs **240** can be provided on at least a portion of the outside surface of the sleeve body **230.** The one or more ribs **240** can extend from a distal surface **20** of the proximally positioned flange **220** along the length of the sleeve body **230.** As illustrated, the one or more ribs **240** can terminate prior to the distal end **20** of the sleeve body **230.** In other configurations, the one or more ribs **240** can terminate, for example, at or near the proximal end of the longitudinal slit **232** or at the distal end **20** of the sleeve body **230.** The one or more ribs **240** can also be operable to have a rib height that tapers along its length with, for example, a greater rib height at a proximal end **10** and a lower rib height at a distal end **20.** In use, the one or more ribs **240** discourage sleeve movement as discussed below.

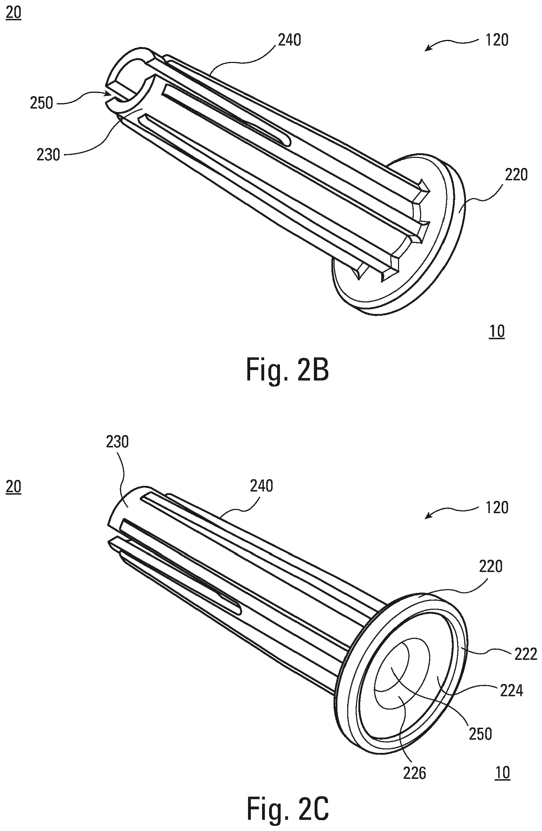

**FIG. 2B** is a first perspective view of the sleeve **120** taken from a distal end **20.** As evident from this view, the sleeve body **230** tapers in external diameter from the proximal end **10** to the distal end **20** and the one or more ribs **240** can be operable to terminate prior to the distal most end of the sleeve body **230.** The sleeve **120** defines a continuous aperture **250** throughout the center of the sleeve **120.** The continuous aperture **250** is sized to receive a fastener **110** therethrough.

**FIG. 2C** is a second perspective view of the sleeve **120** from a proximal end **10.** As will be appreciated from this view, the flange **220** or shoulder can have a lip **222,** which sets an inner diameter of an upper sleeve recess **224.** The sleeve recess **224** is configurable to receive and nest the fastener head from a fastener sized to be paired with the sleeve **120.** An aperture **250** receives the shaft of the fastener into the sleeve **120.** The flange **220** can have a tapered or beveled surface **226** leading to the aperture **250** or bore if the fastener head has a corresponding tapered portion or neck leading to the fastener shank. In some configurations, the flange **220** does not provide a tapered or beveled surface in order for the fastener to be flush or recessed with the upper interface of the flange. Instead, the flange **220** can have a flat surface and aperture such that the head of the fastener is positioned against the upper surface of the flange.

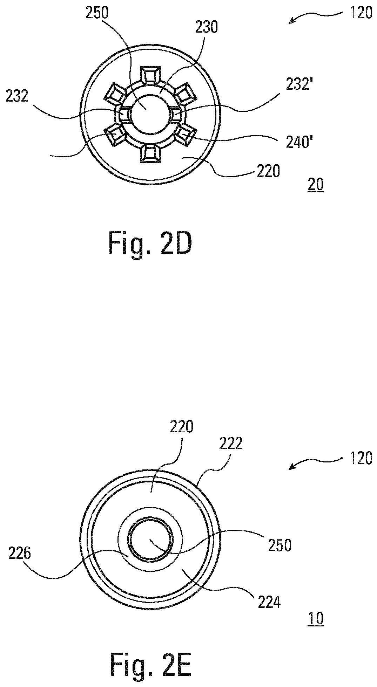

**FIG. 2D** is a view of the sleeve **120** from the distal end **20.** The flange **220** has a diameter that is larger than the diameter of the sleeve body **230.** Two slits **232, 232'** are provided on either side of the sleeve body **230.** As will be appreciated by those of skill in the art, a configuration with one or more slits can be provided without departing from the scope of the disclosure. Additionally, the slits can be equally spaced apart around the diameter of the sleeve body **230.** The sleeve body **230** is also illustrated with a plurality of ribs **240, 240'.** **FIG. 2E** is a view of the sleeve **120** from the proximal end **10.** From the proximal end **10,** the flange **220** is illustrated showing a continuous lip **222** around the exterior of the flange **220.** As will be appreciated by those skilled in the art, the lip **222** need not be continuous and may be comprised of one or more sections. The height of the lip **222** can correspond to the height of the fastener head **112** so that the combination of the fastener **110** and the lip **222** of the sleeve **120** present a uniform, or substantially uniform flat surface at the proximal interface of the fastener assembly.

In some configurations, it may be desirable for the lip **222** to have a height that is greater than the height of the fastener head **112,** so that the fastener head **112** is recessed within the flange **220.** In other configurations, as noted above, the flange may have a flat surface, which is positioned below the fastener head. The diameter of the flange can be the same or less than the diameter of the fastener head.

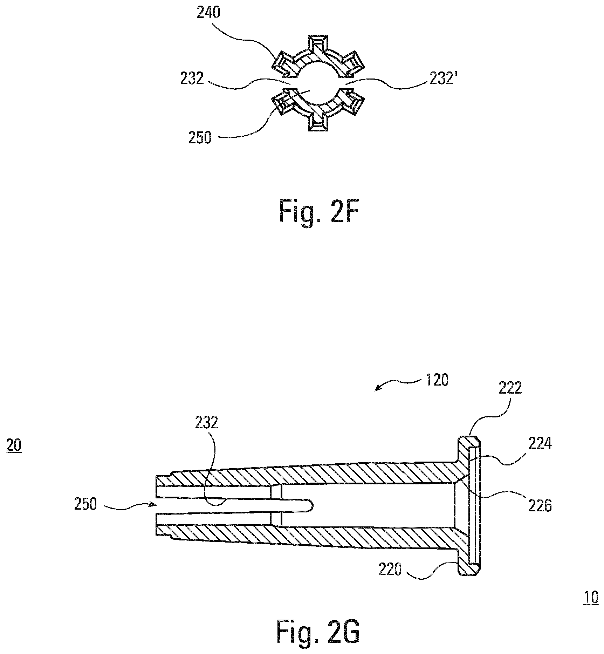

**FIG. 2F** is a cross-sectional view along the lines **F-F** in **FIG. 2A****.** The cross-section illustrates the aperture **250** created by the sleeve **120** through which the fastener passes, and the exterior ribs **240** on the outside surface of the sleeve body **230.** Gaps are also present in the cross-section at the location where the longitudinal slits **232, 232'** are present in a configuration with two longitudinal slits positioned on opposite sides of the sleeve body. As will be appreciated by those skilled in the art, the position of the gap or gaps would change where the number and/or location of slits changed.

**FIG. 2G** is a cross-sectional view along the lines **G-G** in **FIG. 2A** of the sleeve **120.** The sleeve body **230** is shown tapering slightly from a proximal end **10** to a distal end **20.** The sleeve **120** defines an aperture **250** through which a fastener can pass. A longitudinal slit **232** is shown which starts at the distal end **20** and ends approximately midway along the length of the sleeve body **230.** The flange **220** has a lip **222** with an upper sleeve recess **224** and a taper **226.**

**FIGS. 3A-B** illustrate a sleeve **320** similar to the sleeve in **FIGS. 2A-G.** The sleeve **320** differs in this configuration by providing a proximal sleeve body recess **370** between the ribs **240** and the flange **222.** This configuration of a sleeve **320** is particularly suitable for use in construction applications that include securing a cold form steel panel. **FIG. 3A** is a side exterior view of the sleeve **320.** **FIG. 3B** is a cross-sectional view along the length of the sleeve **320** similar to the view in **FIG. 2G****.**

Additional exemplar dimensions for the sleeve include:

**TABLE 1**

| **EXEMPLAR SLEEVE DIMENSIONS** | | |
|---|---|---|
| **Element** | | **Dimension (inches)** |
| Sleeve **(120, 320)** | | |
| | Length | 1.25-8.00 |

| Sleeve body **(230)** | | |
|---|---|---|
| | Width (external surface) - Proximal end **(10)** | 0.30 - 0.50 |
| | Width (external surface) - Distal end **(20)** | 0.30-0.38 |
| | Aperture diameter (interior) - Proximal end **(10)** | 0.20 - 0.30 |
| | Aperture diameter (interior) - Distal end **(20)** | 0.18 - 0.28 |

| Flange **(220)** | | |
|---|---|---|
| | Thickness | 0.05 - 0.12 |
| | Width | 0.6 - 2.0 |
| | Lip **(222)** height (exterior) | 0.06 - 0.12 |
| | Recess **(224)** depth (interior) | 0.02 - 0.6 |

| Rib **(240)** | | |
|---|---|---|
| | Length | 0.4 - 7.2 |
| | Length (as percentage of overall sleeve body length) | 30% - 90% |
| | Width - Proximal end **(10)** | 0.04 - 0.08 |
| | Width - Distal end **(20)** | 0.03 - 0.07 |
| | Height / Thickness - Proximal end **(10)** | 0.04 - 0.10 |
| | Height / Thickness - Distal end **(20)** | 0.04 - 0.08 |

| Longitudinal Distal Slit **(232)** | | |
|---|---|---|
| | Length | 0.50 -2.00 |
| | Width - Proximal end **(10)** | 0.04 - 0.06 |
| | Width - Distal end **(20)** | 0.07 - 0.09 |

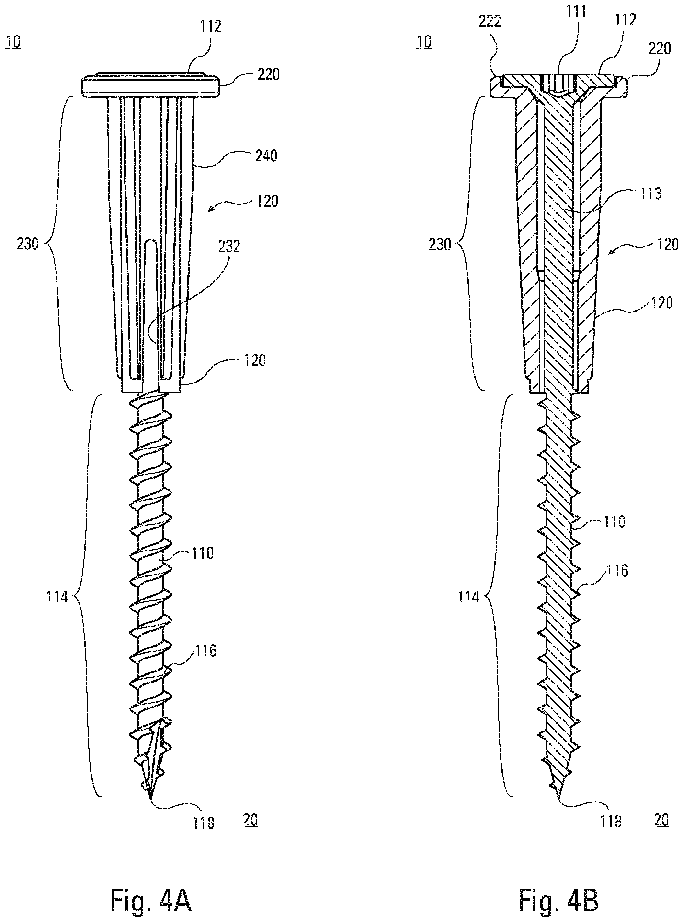

**FIGS. 4A-B** illustrates a fastener assembly that includes the sleeve **120** of **FIG. 2** with a fastener **110.** **FIG. 4A** is a side exterior view of the sleeve **120** with the fastener **110.** The sleeve **120** has a flange **220** and a sleeve body **230.** Along at least a portion of the length of the sleeve body **230** on its exterior surface are one or more ribs **240.** The ribs **240** can connect on a proximal end **10** to the flange **220** and terminate prior to the distal end **20** of the sleeve body **230.** One or more longitudinal slits **232** can be provided in the sleeve body **230.** The longitudinal slit **232** has an opening at the distal end **20** of the sleeve and terminates prior to the flange **220.** The slit **232** is used to facilitate removability of the sleeve **120** with respect to the fastener **110** by allowing the opening at the distal end **20** to radially flex outward. **FIG. 4B** is a cross-sectional view of the sleeve **120** taken longitudinally with the fastener **110.** The flange **220** of the sleeve **120** can be provided with a lip **222** that has a height sufficient to receive the fastener head **112.** A tapered upper sleeve recess **224** can be provided which accommodates a tapered portion between the fastener head **112** and the shank **113.**

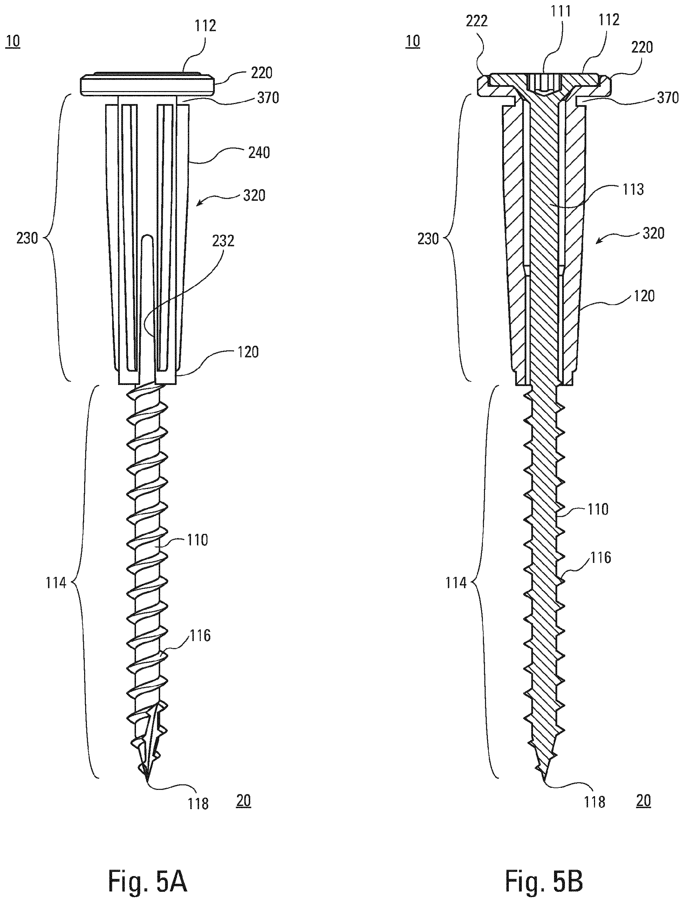

**FIG. 5A** is a side exterior view of a fastener assembly including the sleeve **320** with the fastener **110.** The sleeve **320** has a flange **220** and a sleeve body **230.** Along at least a portion of the length of the sleeve body **230** on its exterior surface are one or more ribs **240.** The ribs **240** can connect on a proximal end **10** to the flange **220** and terminate prior to the distal end **20** of the sleeve body **230.** One or more longitudinal slits **232** can be provided in the sleeve body **230.** The longitudinal slit **232** has an opening at the distal end **20** of the sleeve and terminates prior to the flange **220.** The slit **232** is used to facilitate removability of the sleeve **320** with respect to the fastener **110** by allowing the opening at the distal end **20** to radially flex outward. Additionally, a sleeve body recess **370** is provided between the ribs **240** and the flange **220.** **FIG. 5B** is a cross-sectional view of the sleeve **320** taken longitudinally with the fastener **110.** The flange **220** of the sleeve **320** can be provided with a lip **222** that has a height sufficient to receive the fastener head **112.** A tapered upper sleeve recess **224** can be provided which accommodates a tapered portion between the fastener head **112** and the shank **113.**

### III. METHODS OF USE

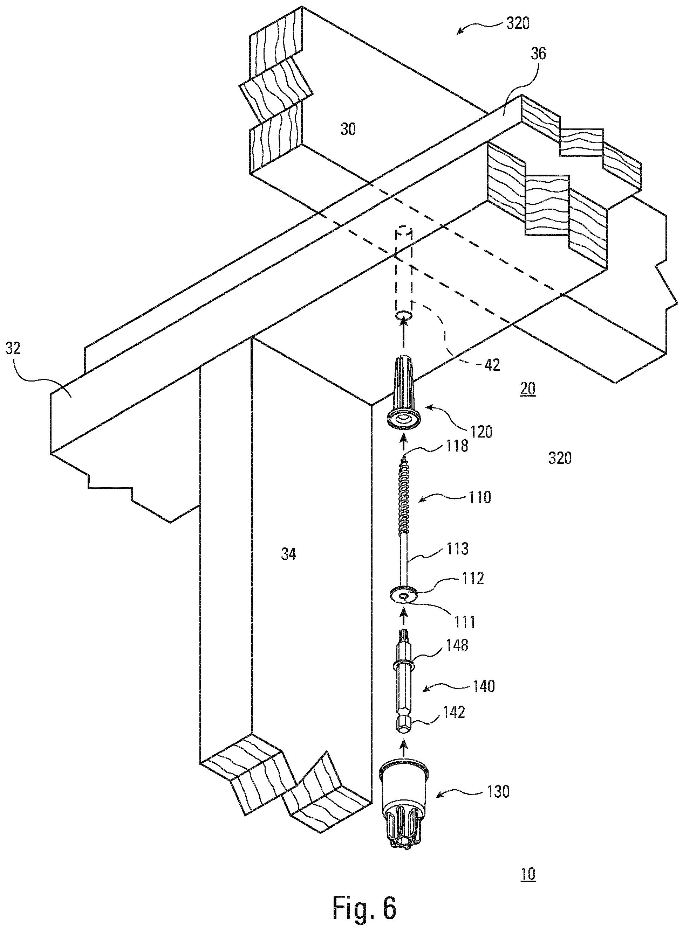

**FIG. 6** illustrates use of the fastener installation system **100** to install a fastener **110** and a sleeve **120** to connect a first wood element to a second wood element. An installation guide **130** has a bit **140,** which is used to install the sleeve **120** and the fastener **110.** The shank end of the bit **140** can be a standard component adapted to be releasably held in the chuck of an electric drill or similar rotary tool. The distal end **20** of the installation guide **130** can be provided with a cylindrical receptacle or cavity **138,** which receives the bit **140.** The bit can have a distal end **20** that has a hex, Torx, square, X, shape. The cavity **138** is dimensioned to receive the fastener head **112** and the sleeve **120,** with the bit **140** engaging a drive socket of the fastener head **112.** The depth of the cavity **138** is predetermined to release the fastener head **112** at a desired distance from the surface receiving the installation.

Preliminarily, the user determines whether a flush installation or an offset installation is desired for the particular application. As described above, if needed the user changes the position of the installation guide **130** relative to the secured e-clip **148** to achieve the desired installation result without changing the location of the secured e-clip **148.** For the offset drive position, shown in **FIG. IF,** the user inserts the distal end **20** of the bit **140** into the proximal end **10** of the channel **134** of the installation guide **130.** For the flush drive position, shown in **FIG. 1H****,** the user inserts the proximal end **10** of the bit **140** into distal end **20** of the channel **134** of the installation guide **130** through the cavity **138.**

If not already combined, the fastener **110** can be removably positioned within the bore or aperture **250** of the sleeve **120** to form a fastener assembly when combined. The installation guide tool **130** also engages the drive tool directly, or indirectly, via an extension, by inserting the hex shank **142** of the bit **140** into the chuck of the drive tool.

The fastener head **112** fits within an upper sleeve recess **224** of the flange **220** of the sleeve **120.** The fastener assembly is loaded into the cavity **138** of installation guide **130.** Once the fastener assembly and the installation guide are engaged, the fastener assembly is then inserted into the hole **42,** so that the tip of the fastener **110** impinges on the joist **44.** As the drive tool is activated, the fastener assembly is inserted into hole **42.** Advancing the sleeve **120** of the fastener assembly through hole **42** causes the sleeve to be squeezed around the fastener **110.** The longitudinal slits **232** cause the sleeve **120** to clamp tightly on the fastener **110** as the fastener **110** is installed. Additionally, the ribs **240** embed into the surface of, for example, the header **32** that also prevents the sleeve **120** from moving after installation.

The depth of the installation guide **130** cavity **138** determines a spacing between the fastener head **112** from the bottom surface of header **32.** Thus the fastener head **112** may impinge fully on the surface of header **32** or be spaced apart from the surface of the header **32** by a pre-determined distance to allow flexure of the building framing without damaging the interior non-bearing walls.

As shown in **FIG. 6****,** a driver bit is assembled for flush installation. A top plate **36,** such as a 3/4" board, is shown secured atop the header **32** and perpendicular to a wall stud **34** on one side and a joist **30** on another side. A hole **42** may be drilled upwardly through the header **32** and the top plate **36** at a location where the hole **42** will align with the beam or joist **30,** or other structural component. As will be appreciated by those of skill in the art, **FIG. 6** illustrates a fastener with a built-up top plate rather than a single top plate. From a proximal position the installation guide **130** receives the bit **140** into its cavity, the e-clip **148** of the bit **140** is then positioned inside the installation guide. The bit **140** engages the head **112** of the fastener **110.** The fastener **110** passes through the sleeve **120.**

The disclosed fastener installation systems **100** and fastener assemblies may be used in several different ways to secure non-bearing walls and the like to building framing. As shown in **FIG. 6****,** a fastener installation system **100** having a shorter fastener **110** and sleeve **120** may be chosen. The length of sleeve **120** can be greater than the height of header **32** by a predetermined length, such as about 3/4". The hole **42** is then drilled vertically upwardly through header **32,** and the fastener **110** and sleeve **120** assembly is installed through the hole **42** with the top of the fastener **110** flush with the bottom surface of header **32.** The excess length of the sleeve **120** extends through the hole **42** and protrudes upwardly from header **32.** The proximal end **10** of the sleeve **120** abuts the bottom surface of the joist **30,** so that any excess length of sleeve **120** establishes a gap between the header **32** and the joist **30.** The gap enables the frame to undergo loading and accommodate vertical deflection without transferring load to the non-bearing walls, thereby minimizing damage from load transfer such as stress cracks at the corners of door openings, buckled wall sheathing, doors that stick or will not latch, and the like.

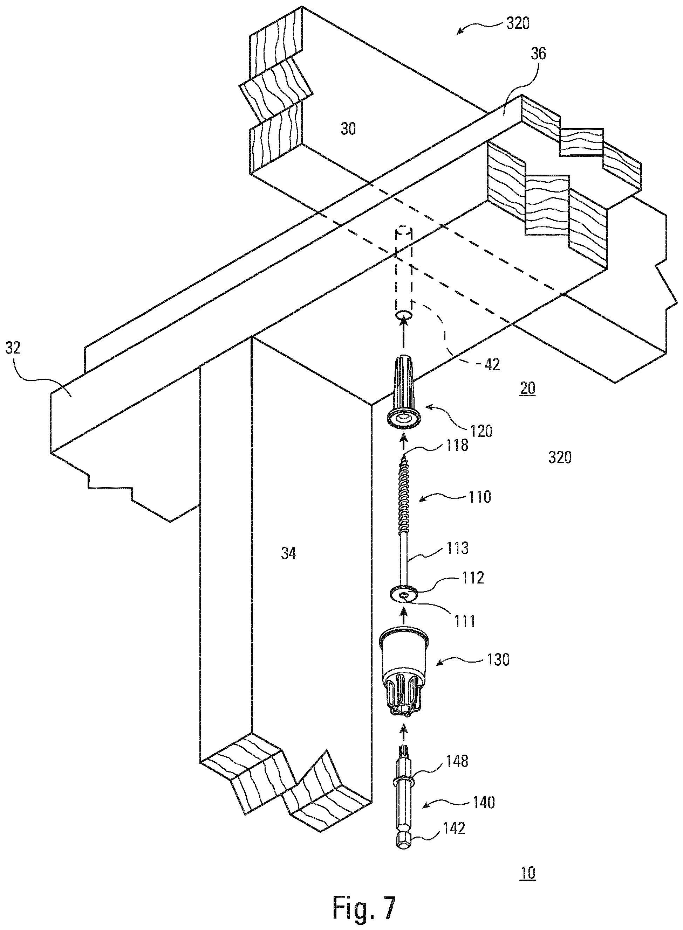

**FIG. 7** illustrates use of the system to install a fastener in an offset installation. From a proximal position, the bit **140** passes through the guide member aperture of the installation guide **130,** the e-clip **148** of the bit **140** is then positioned on a distal external surface of the installation guide. The bit **140** engages the head **112** of the fastener **110.** The fastener **110** passes through the sleeve **120.**

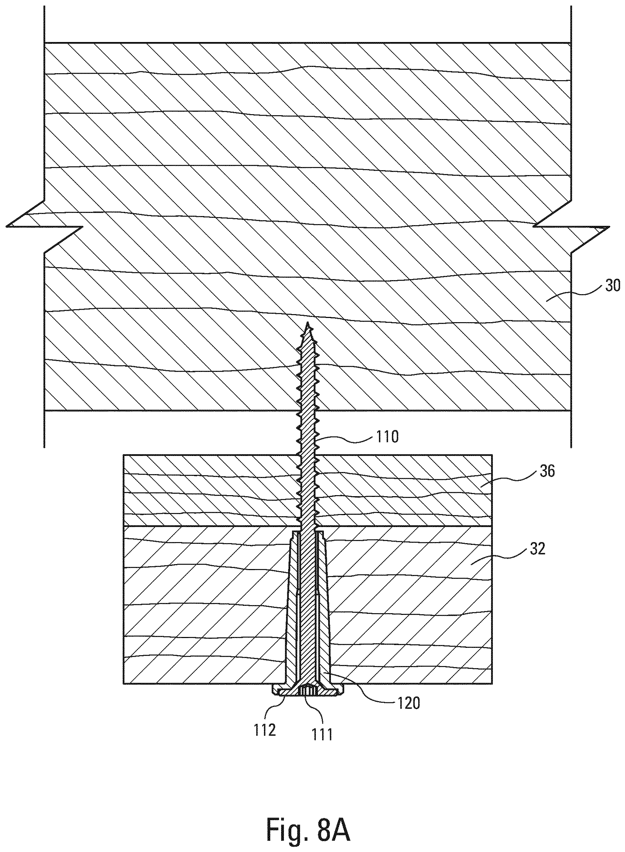

**FIG. 8A** illustrates an exemplar flush installation of a fastener and a sleeve through a header **32,** a top plate **36** and a joist **30.**

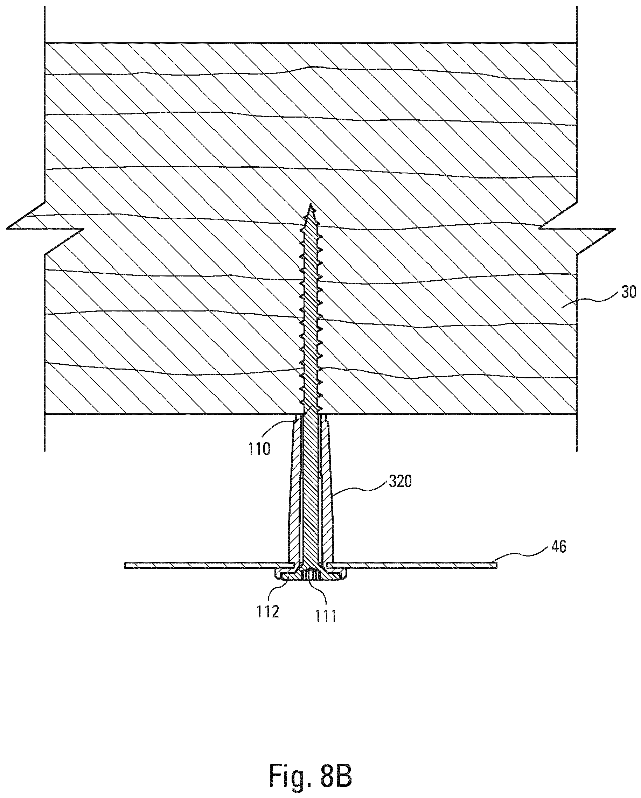

**FIG. 8B** illustrates an exemplar installation of a fastener and a sleeve to connect a cold form steel **40** element to a wood element. The cold form steel **40-layer** nests in the sleeve body recess **370** during the installation process. Thus, the sleeve body recess **370** prevents the sleeve **110** from moving laterally when the fastener and sleeve assembly are installed through a cold-formed steel **40** layer.

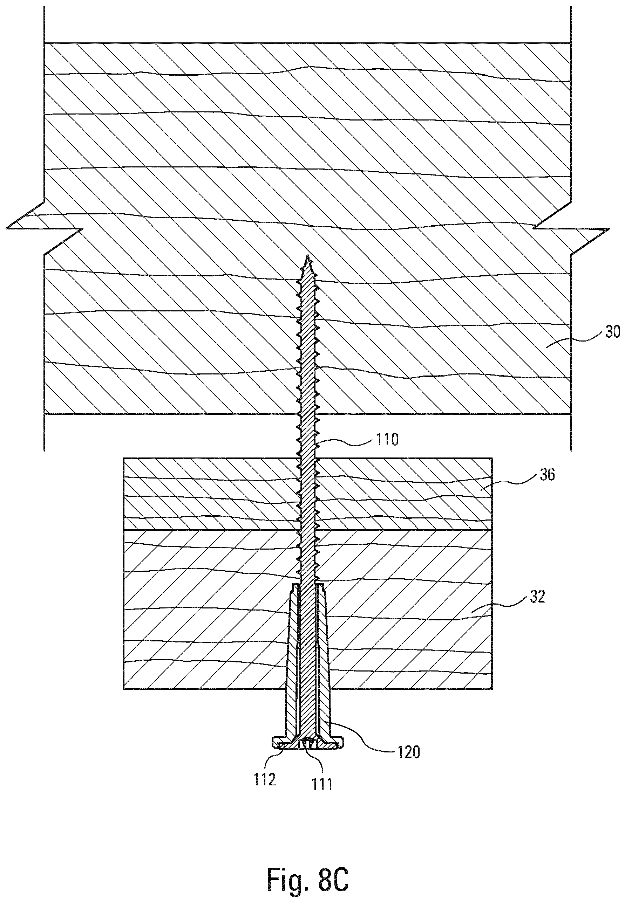

**FIG. 8C** illustrates an exemplar offset installation of a fastener and a sleeve through a header **32,** a top plate **36** and a joist **30.** As will be appreciation by those skilled in the art, other installations are possible, including installation with other building materials, without departing from the scope of the disclosure.

As will be appreciated by those skilled in the art, the fastener assemblies disclosed herein are suitable for installing a wall section having a vertical wall stud and a top header extending along the top end of the wall section in a frame structure having a plurality of floor joists or roof trusses. The installation is achieved by providing a plurality of fastener assemblies, each fastener assembly having a threaded fastener extendable through a fastener sleeve having at least one of one or more external ribs and one or more distal slits. Forming a plurality of holes vertically through the top header of the wall section, each hole being generally aligned with one of the floor joists or the roof trusses. Once the holes are formed, extending the sleeve member of one of the fastener assemblies vertically and slidably through one of the holes and through the top header of the wall section. Once the fastener assembly is in position, driving the threaded fastener of the fastener assembly through the sleeve member into the aligned floor joist or roof truss to achieve a spacing gap between the floor joist or roof truss and the top header of the wall section. Once the threaded fastener is anchored in the floor joist or roof truss and the wall section is supported, the spacing gap accommodates vertical deflection of the frame structure without impinging on and loading the wall section. The spacing gap is made during the construction by, for example, making the wall a specified amount shorter than the height to the bottom of the joist/truss.

### IV. ITEMS

The present disclosure relates to the following items:
**Item 1:** relates to a fastener sleeve comprising a sleeve length from a proximal end to a distal end wherein the fastener sleeve defines a bore for removably receiving a fastener therethrough and further wherein the fastener sleeve has one or more tapered longitudinal ribs on an exterior surface and the one or more tapered longitudinal ribs terminate prior to the distal end of the fastener sleeve.
**Item 2:** relates to the fastener sleeve of item **1,** wherein the fastener sleeve has at least one of a tapered interior diameter and a tapered exterior diameter.
**Item 3:** relates to the fastener sleeve of item **1,** wherein the fastener sleeve has one or more distal slits.
**Item 4** relates to the fastener sleeve of item **3,** wherein the one or more distal slits has a slit length less than the fastener sleeve length.
**Item 5:** relates to the fastener sleeve of item **1,** wherein the distal end of the fastener sleeve is operable to flex radially outward.
**Item 6:** relates to the fastener sleeve of item **1,** wherein the fastener sleeve has a proximal flange.
**Item 7:** relates to the fastener sleeve of item **6,** wherein the proximal flange of the fastener sleeve has a recess on a proximal surface operable to receive a fastener head.
**Item 8:** relates to the fastener sleeve of item **6,** wherein the fastener sleeve further comprises a proximal sleeve body recess between a proximal end of the one or more ribs and a lower surface of the proximal flange.
**Item 9:** relates to a fastener sleeve comprising a sleeve length from a proximal end to a distal end wherein the fastener sleeve defines a bore for removably receiving a fastener therethrough and further wherein the fastener sleeve has an integrally formed proximal flange and one or more distal slits.
**Item 10:** relates to the fastener sleeve of item **9,** wherein the fastener sleeve has at least one of a tapered interior diameter and a tapered exterior diameter.
**Item 11:** relates to the fastener sleeve of item **9,** wherein the fastener sleeve further comprises one or more longitudinal ribs having a tapered depth along a length of the one or more longitudinal ribs.
**Item 12:** relates to the fastener sleeve of item **9,** wherein the one or more distal slits has a slit length less than the fastener sleeve length.
**Item 13:** relates to the fastener sleeve of item **9,** wherein the distal end of the fastener sleeve is operable to flex radially outward.
**Item 14:** relates to the fastener sleeve of item **9,** wherein the proximal flange has a recess on a proximal surface operable to receive a fastener head.
**Item 15:** relates to the fastener sleeve of item **9,** wherein the fastener sleeve further comprises a proximal sleeve body recess between a proximal end of the one or more ribs and a lower surface of the proximal flange.
**Item 16:** relates to a fastener assembly comprising: a fastener; and a fastener sleeve with a sleeve length from a proximal end to a distal end wherein the fastener sleeve defines a bore for removably receiving a fastener therethrough and further wherein the fastener sleeve has one or more tapered longitudinal ribs on an exterior surface and the one or more tapered longitudinal ribs terminate prior to the distal end of the fastener sleeve.
**Item 17:** relates to the fastener assembly of item **16,** wherein the fastener sleeve has at least one of a tapered interior diameter and a tapered exterior diameter.
**Item 18:** relates to the fastener assembly of item **16,** wherein the fastener sleeve has one or more distal slits.
**Item 19:** relates to the fastener assembly of item **16,** wherein the one or more distal slits has a slit length less than the fastener sleeve length.
**Item 20:** relates to the fastener assembly of item **16,** wherein the distal end of the fastener sleeve is operable to flex radially outward.
**Item21:** relates to the fastener assembly of item **16,** wherein the fastener sleeve has a proximal flange.
**Item 22:** relates to the fastener assembly of item **21,** wherein the proximal flange of the fastener sleeve has a recess on a proximal surface operable to receive a fastener head.
**Item 23:** relates to the fastener assembly of item **21,** wherein the fastener sleeve further comprises a proximal sleeve body recess between a proximal end of the one or more ribs and a lower surface of the proximal flange.
**Item 24:** relates to a fastener assembly comprising: a fastener; and a fastener sleeve with a sleeve length from a proximal end to a distal end wherein the fastener sleeve defines a bore for removably receiving a fastener therethrough and further wherein the fastener sleeve has an integrally formed proximal flange and one or more distal slits.
**Item 25:** relates to the fastener assembly of item **24,** wherein the fastener sleeve has at least one of a tapered interior diameter and a tapered exterior diameter.
**Item 26:** relates to the fastener assembly of item **24,** wherein the fastener sleeve further comprises one or more longitudinal ribs having a tapered depth along a length of the one or more longitudinal ribs.
**Item 27:** relates to the fastener assembly of item **24,** wherein the one or more distal slits has a slit length less than the fastener sleeve length.
**Item 28:** relates to the fastener assembly of item **24,** wherein the distal end of the fastener sleeve is operable to flex radially outward.
**Item 29:** relates to the fastener assembly of item **24,** wherein the proximal flange has a recess on a proximal surface operable to receive a fastener head.
**Item 30:** relates to the fastener assembly of item **24,** wherein the fastener sleeve further comprises a proximal sleeve body recess between a proximal end of the one or more ribs and a lower surface of the proximal flange.
**Item 31:** relates to an installation method including the steps of: providing a fastener assembly comprising a fastener having a fastener head and a threaded shaft, and a removable fastener sleeve; extending the fastener sleeve member of the fastener assembly through a hole in a target surface; and driving the threaded shaft of the fastener into the target surface while also setting a spacing gap, whereby the threaded fastener is anchored in the target surface, and the spacing gap accommodates a deflection of the target surface.
**Item 32:** relates to the installation method of item **31,** wherein a flange at a proximal end of the fastener sleeve is larger in diameter than the hole in the target surface.
**Item 33:** relates to the installation method of item **31,** further including the step of providing an installation guide with a bit for engaging and rotating the fastener head, wherein the installation guide has an axially aligned receptacle dimensioned to releasably retain the fastener assembly to provide a known depth to achieve at least one of a flush installation of the fastener assembly and an offset installation of the fastener assembly.
**Item 34:** relates to the installation method of item **31,** wherein the fastener assembly is installed through a hole from below, and the fastener is threaded into a floor joist or a roof truss.
**Item 35:** relates to the installation method of item **31,** wherein the fastener has a length greater than a length of the fastener sleeve.
**Item 36:** relates to the installation method of item **31,** wherein the fastener can translate within the fastener sleeve member to accommodate a vertical deflection.
**Item 37:** relates to the installation method of item **31,** wherein the fastener sleeve can translate within a hole to accommodate deflection without loading a wall section.
**Item 38:** relates to the installation method of item **31,** further including the step of providing a mounting clip for a ceiling panel installed adjacent to a wall section, wherein the mounting clip is secured to an edge portion of the ceiling panel and spaced about a perimeter of the ceiling panel.
**Item 39:** relates to the installation method of item **38,** further including the step of securing the mounting clip to a top header of the wall section wherein the mounting clip is being free of attachment to a floor joists or a roof truss.
**Item 40:** relates to the installation method of item **31,** further including the step of forming a hole through a target surface.
**Item 41:** relates to system comprising: a fastener; a fastener sleeve having a sleeve length from a proximal end to a distal end wherein the fastener sleeve defines a bore for removably receiving the fastener therethrough and further wherein the fastener sleeve has one or more longitudinal ribs on an exterior surface; a bit having an e-clip; and an installation guide operable to securely receive a bit through a central aperture wherein the installation guide has a first configuration for an offset installation and a second configuration for a flush installation.
**Item 42:** relates to the system of item **41,** wherein the fastener sleeve has at least one of a tapered interior diameter and a tapered exterior diameter.
**Item 43:** relates to the system of item **41,** wherein the fastener sleeve the one or more longitudinal ribs have a tapered depth along a length of the one or more longitudinal ribs.
**Item 44:** relates to the system of item **41,** wherein the one or more longitudinal ribs terminate prior to the distal end of the fastener sleeve.
**Item 45:** relates to the system of item **41,** wherein the fastener sleeve has one or more distal slits.
**Item 46:** relates to the system of item **45,** wherein the one or more distal slits has a slit length less than the fastener sleeve length.
**Item 47:** relates to the system of item **41,** wherein the distal end of the fastener sleeve is operable to flex radially outward.
**Item 48:** relates to the system of item **41,** wherein the fastener sleeve has a proximal flange.
**Item 49:** relates to the system of item **48,** wherein the proximal flange has a recess on a proximal surface operable to receive a fastener head.
**Item 50:** relates to the system of item **48,** wherein the fastener sleeve further comprises a proximal sleeve body recess between a proximal end of the one or more ribs and a lower surface of the proximal flange.
**Item 51:** relates to the system of item **41,** wherein the installation guide has a plurality of external ribs and a distal cavity.
**Item 52:** relates to a kit comprising: a fastener; a fastener sleeve having a sleeve length from a proximal end to a distal end wherein the fastener sleeve defines a bore for removably receiving the fastener therethrough further wherein the fastener sleeve has one or more tapered longitudinal ribs on an exterior surface and the one or more tapered longitudinal ribs terminate prior to the distal end of the sleeve; a bit having an e-clip; and an installation guide operable to securely receive a bit through a central aperture wherein the installation guide has a first configuration for an offset installation and a second configuration for a flush installation.
**Item 53:** relates to a kit comprising: a fastener; a fastener sleeve with a sleeve length from a proximal end to a distal end wherein the fastener sleeve defines a bore for removably receiving a fastener therethrough and further wherein the fastener sleeve has an integrally formed proximal flange and one or more distal slits; a bit having an e-clip; and an installation guide operable to securely receive a bit through a central aperture wherein the installation guide has a first configuration for an offset installation and a second configuration for a flush installation.
**Item 54:** relates to a method for installing a wall section having vertical wall studs and a top header extending along like top ends of the wall section, in a frame structure having a plurality of floor joists or roof trusses extending above the wall section, including the steps of: providing a plurality of fastener assemblies, each fastener assembly having a threaded fastener extending through a sleeve member, each sleeve member have at least one of one or more external ribs, and one or more distal slits; forming a plurality of holes extending vertically through the top header of the wall section, each hole being generally aligned with one of the floor joists or roof trusses; and extending the sleeve member of one of the fastener assemblies vertically and slidably through one of the holes and through the top header of the wall section and driving the respective threaded fastener through the sleeve member into the aligned floor joist or roof truss while also setting a spacing gap between the floor joist or roof truss and the top header of the wall section, whereby the threaded fasteners are anchored in the floor joists or roof trusses and the wall section is supported, and the spacing gap accommodates vertical deflection of the frame structure without impinging on and loading the wall section.
**Item 55:** relates to the method for installing a wall section of item **54,** further including providing a sleeve head at one end of each of the sleeve members, the sleeve head being larger in diameter than the hole in the top header of the wall section; further including providing a fastener rotary driver bit for engaging and rotating the threaded fastener head and the sleeve head, the fastener rotary driver bit having an axially aligned receptacle dimensioned to releasably retain the threaded fastener head and the sleeve head; providing the receptacle of the fastener rotary driver bit with a known depth that sets a predetermined spacing between the sleeve head and a surface into which the fastener assembly is driven, the predetermined spacing forming the spacing gap.
**Item 56:** relates to the method for installing a wall section of item **55,** further including providing the sleeve head with a counter bore sized to receive the threaded fastener head therein.
**Item 57:** relates to the method for installing a wall section of item **56,** wherein the fastener assemblies are installed through the holes from below, and the threaded fasteners are threaded into the floor joists or roof trusses from below.
**Item 58:** relates to the method for installing a wall section of item **54,** wherein the threaded fastener is greater in length than the sleeve.
**Item 59:** relates to the method for installing a wall section of item **54,** wherein the threaded fastener is capable of translation within the sleeve member to accommodate vertical deflection of the frame structure without impingement on and loading of the wall section.
**Item 60:** relates to the method for installing a wall section of item **54,** wherein the sleeve member is capable of translation within the respective hole to accommodate vertical deflection of the frame structure without impinging on and loading the wall section.
**Item 61:** relates to the method for installing a wall section of item **54,** further including providing a plurality of mounting clips for a ceiling panel installed adjacent to the wall section, the mounting clips being secured to edge portions of the ceiling panel and spaced about the perimeter of the ceiling panel.
**Item 62:** relates to the method for installing a wall section of item **61,** further including the step of securing the mounting clips to the top header of the wall section, the mounting clips being free of attachment to the floor joists or roof trusses supporting the wall section.
**Item 63:** relates to an apparatus for installing a wall section having vertical wall studs and a top header extending along like top ends of the wall section, in a frame structure having a plurality of floor joists or roof trusses extending above the wall section, including: a plurality of fastener assemblies, each having a threaded fastener extending through a sleeve member; a plurality of holes extending vertically in the top header of the wall section, each hole being generally aligned with one of the floor joists or roof trusses; one of the sleeve members extending vertically and slidably through one of the holes and through the top header of the wall section with the respective threaded fastener extending through the sleeve member and driven into the aligned floor joist or roof truss; and a fastener rotary driver bit for engaging and rotating the threaded fasteners and including means to establish a spacing gap between the floor joist or roof truss and the top header of the wall section, whereby the threaded fasteners are anchored in the floor joists or roof trusses and the wall section is supported, and the spacing gap accommodates vertical deflection of the frame structure without impinging on and loading the wall section.
**Item 64:** relates to the apparatus for installing a wall section of item **63,** further including a sleeve head at one end of each of the sleeve members, the sleeve head being larger in diameter than the hole in the top header of the wall section.
**Item 65:** relates to the apparatus for installing a wall section of item **65,** wherein the threaded fastener includes an enlarged head end, and the sleeve head includes a counter bore for receiving the enlarged head end in complementary fashion.
**Item 66:** relates to the apparatus for installing a wall section of item **65,** the fastener rotary driver bit having an axially aligned receptacle dimensioned to releasably retain the threaded fastener head and the sleeve head.
**Item 67:** relates to the he apparatus for installing a wall section of item **66,** wherein the receptacle of the fastener rotary driver bit includes a known depth that sets a predetermined spacing between the sleeve head and a surface into which the fastener assembly is driven, the predetermined spacing forming the spacing gap.
**Item 68:** relates to the apparatus for installing a wall section of item **63,** wherein the threaded fastener is greater in length than the sleeve.
**Item 69:** relates to the apparatus for installing a wall section of item **63,** wherein the threaded fastener is capable of translation within the sleeve member to accommodate vertical deflection of the frame structure without impingement on and loading of the wall section.
**Item 70:** relates to the apparatus for installing a wall section of item **63,** wherein the sleeve member is capable of translation within the respective hole to accommodate vertical deflection of the frame structure without impinging on and loading the wall section.
**Item 71:** A method for installing a wall section having vertical wall studs and a top header extending along like top ends of the wall section, in a frame structure having a plurality of floor joists or roof trusses extending above the wall section, including the steps of: providing a plurality of fastener assemblies, each one of the plurality of fastener assemblies having a threaded fastener extending through a sleeve member having at least one of one or more ribs on an exterior surface and one or more distal slits, wherein each one of the threaded fasteners has a fastener head and a fastener length that is greater than a length of the sleeve member; forming a plurality of holes extending vertically through the top header of the wall section, each of the plurality of holes being generally aligned with one of the floor joists or roof trusses wherein each one of the plurality of holes is configured to receive one of the plurality of fastener assemblies; and extending each one of the plurality of fastener assemblies vertically and slidably through one of the plurality of holes and driving each one of the threaded fasteners through its corresponding sleeve member into the aligned floor joist or roof truss while also setting a spacing gap between the floor joist or roof truss and the top header of the wall section for each one of the fastener assemblies, whereby each one of the threaded fasteners are anchored in the floor joists or roof trusses and the wall section is supported, and each one of the spacing gaps between the floor joist or roof truss for each of the fastener assemblies accommodates vertical deflection of the frame structure without impinging on and loading the wall section.

While preferred embodiments of the present invention have been shown and described herein, it will be obvious to those skilled in the art that such embodiments are provided by way of example only. Numerous variations, changes, and substitutions will now occur to those skilled in the art without departing from the invention. It should be understood that various alternatives to the embodiments of the invention described herein may be employed in practicing the invention. It is intended that the claims define the scope of the invention and that methods and structures within the scope of these claims and their equivalents be covered thereby.

The following clauses describe further preferred aspects of the present invention:
1. A fastener sleeve comprising a sleeve length from a proximal end to a distal end wherein the fastener sleeve defines a bore for removably receiving a fastener therethrough and further wherein the fastener sleeve has one or more longitudinal ribs on an exterior surface and the one or more longitudinal ribs terminate prior to the distal end of the fastener sleeve.
2. The fastener sleeve of clause **1,** wherein the fastener sleeve has at least one of a tapered interior diameter and a tapered exterior diameter.
3 The fastener sleeve of clause **1,** wherein the fastener sleeve has one or more distal slits.
4 The fastener sleeve of clause **3,** wherein the one or more distal slits has a slit length less than the fastener sleeve length.
5. The fastener sleeve of clause **1,** wherein the distal end of the fastener sleeve is operable to flex radially outward.
6. The fastener sleeve of clause **1,** wherein the fastener sleeve has a proximal flange.
7. The fastener sleeve of clause **6,** wherein the proximal flange of the fastener sleeve has a recess on a proximal surface operable to receive a fastener head.
8. The fastener sleeve of clause **6,** wherein the fastener sleeve further comprises a proximal sleeve body recess between a proximal end of the one or more ribs and a lower surface of the proximal flange.
9. A fastener sleeve comprising a sleeve length from a proximal end to a distal end wherein the fastener sleeve defines a bore for removably receiving a fastener therethrough and further wherein the fastener sleeve has a proximal flange and one or more distal slits.
10. The fastener sleeve of clause **9,** wherein the fastener sleeve has at least one of a tapered interior diameter and a tapered exterior diameter.
11. The fastener sleeve of clause **9,** wherein the fastener sleeve further comprises one or more longitudinal ribs having a tapered depth along a length of the one or more longitudinal ribs.
12. The fastener sleeve of clause **9,** wherein the one or more distal slits has a slit length less than the fastener sleeve length.
13. The fastener sleeve of clause **9,** wherein the distal end of the fastener sleeve is operable to flex radially outward.
14. The fastener sleeve of clause **9,** wherein the proximal flange has a recess on a proximal surface operable to receive a fastener head.
15. The fastener sleeve of clause **9,** wherein the fastener sleeve further comprises a proximal sleeve body recess between a proximal end of the one or more ribs and a lower surface of the proximal flange.
16. A fastener assembly comprising:
   a fastener; and
   a fastener sleeve with a sleeve length from a proximal end to a distal end wherein the fastener sleeve defines a bore for removably receiving a fastener therethrough and further wherein the fastener sleeve has one or more longitudinal ribs on an exterior surface and the one or more longitudinal ribs terminate prior to the distal end of the fastener sleeve.
17. The fastener assembly of clause **16,** wherein the fastener sleeve has at least one of a tapered interior diameter and a tapered exterior diameter.
18. The fastener assembly of clause **16,** wherein the fastener sleeve has one or more distal slits.
19. The fastener assembly of clause **18,** wherein the one or more distal slits has a slit length less than the fastener sleeve length.
20. The fastener assembly of clause **16,** wherein the distal end of the fastener sleeve is operable to flex radially outward.
21. The fastener assembly of clause **16,** wherein the fastener sleeve has a proximal flange.
22. The fastener assembly of clause **21,** wherein the proximal flange of the fastener sleeve has a recess on a proximal surface operable to receive a fastener head.
23. The fastener assembly of clause **21,** wherein the fastener sleeve further comprises a proximal sleeve body recess between a proximal end of the one or more ribs and a lower surface of the proximal flange.
24. A fastener assembly comprising:
   a fastener; and
   a fastener sleeve with a sleeve length from a proximal end to a distal end wherein the fastener sleeve defines a bore for removably receiving a fastener therethrough and further wherein the fastener sleeve has a proximal flange and one or more distal slits.
25. The fastener assembly of clause **24,** wherein the fastener sleeve has at least one of a tapered interior diameter and a tapered exterior diameter.
26. The fastener assembly of clause **24,** wherein the fastener sleeve further comprises one or more longitudinal ribs having a tapered depth along a length of the one or more longitudinal ribs.
27. The fastener assembly of clause **24,** wherein the one or more distal slits has a slit length less than the sleeve length.
28. The fastener assembly of clause **24,** wherein the distal end of the fastener sleeve is operable to flex radially outward.
29. The fastener assembly of clause **24,** wherein the proximal flange has a recess on a proximal surface operable to receive a fastener head.
30. The fastener assembly of clause **26,** wherein the fastener sleeve further comprises a proximal sleeve body recess between a proximal end of the one or more ribs and a lower surface of the proximal flange.
31. An installation method including the steps of:
   providing a fastener assembly comprising a fastener having a fastener head and a threaded shaft, and a fastener sleeve;
   extending the fastener sleeve of the fastener assembly through a hole in a target surface; and
   driving the threaded shaft of the fastener into the target surface while also setting a spacing gap, whereby the threaded fastener is anchored in the target surface, and the spacing gap accommodates a deflection of the target surface.
32. The installation method of clause **31,** wherein a flange at a proximal end of the fastener sleeve is larger in diameter than the hole in the target surface.
33. The installation method of clause **31,** further including the step of providing an installation guide with a bit for engaging and rotating the fastener head, wherein the installation guide has an axially aligned receptacle dimensioned to releasably retain the fastener assembly to provide a known depth to achieve at least one of a flush installation of the fastener assembly and an offset installation of the fastener assembly.
34. The installation method of clause **31,** wherein the fastener assembly is installed through a hole from below, and the fastener is threaded into a floor joist or a roof truss.
35. The installation method of clause **31,** wherein the fastener has a fastener length greater than a sleeve length.
36. The installation method of clause **31,** wherein the fastener can translate within the fastener sleeve to accommodate a vertical deflection.
37. The installation method of clause **31,** wherein the fastener sleeve can translate within a hole to accommodate deflection without loading a wall section.
38. The installation method of clause **31,** further including the step of providing a mounting clip for a ceiling panel installed adjacent to a wall section, wherein the mounting clip is secured to an edge portion of the ceiling panel and spaced about a perimeter of the ceiling panel.
39. The installation method of clause **38,** further including the step of securing the mounting clip to a top header of the wall section wherein the mounting clip is being free of attachment to a floor joists or a roof truss.
40. The installation method of clause **31,** further including the step of forming a hole through a target surface.
41. A system comprising:
   a fastener;
   a fastener sleeve having a sleeve length from a proximal end to a distal end wherein the fastener sleeve defines a bore for removably receiving the fastener therethrough and further wherein the fastener sleeve has one or more longitudinal ribs on an exterior surface;
   a bit having an e-clip; and
   an installation guide operable to securely receive a bit through a central aperture wherein the installation guide has a first configuration for an offset installation and a second configuration for a flush installation.
42. The system of clause **41,** wherein the fastener sleeve has at least one of a tapered interior diameter and a tapered exterior diameter.
43. The system of clause **41,** wherein the fastener sleeve the one or more longitudinal ribs have a tapered depth along a length of the one or more longitudinal ribs.
44. The system of clause **41,** wherein the one or more longitudinal ribs terminate prior to the distal end of the fastener sleeve.
45. The system of clause **41,** wherein the fastener sleeve has one or more distal slits.
46. The system of clause **45,** wherein the one or more distal slits has a slit length less than the fastener sleeve length.
47. The system of clause **41,** wherein the distal end of the fastener sleeve is operable to flex radially outward.
48. The system of clause **41,** wherein the fastener sleeve has a proximal flange.
49. The system of clause **48,** wherein the proximal flange has a recess on a proximal surface operable to receive a fastener head.
50. The system of clause **48,** wherein the fastener sleeve further comprises a proximal sleeve body recess between a proximal end of the one or more ribs and a lower surface of the proximal flange.
51. The system of clause **41,** wherein the installation guide has a plurality of external ribs and a distal cavity.
52. A kit comprising:
   a fastener;
   a fastener sleeve having a sleeve length from a proximal end to a distal end wherein the fastener sleeve defines a bore for removably receiving the fastener therethrough further wherein the fastener sleeve has one or more tapered longitudinal ribs on an exterior surface and the one or more tapered longitudinal ribs terminate prior to the distal end of the sleeve;
   a bit having an e-clip; and
   an installation guide operable to securely receive a bit through a central aperture wherein the installation guide has a first configuration for an offset installation and a second configuration for a flush installation.
53. A kit comprising:
   a fastener;
   a fastener sleeve with a sleeve length from a proximal end to a distal end wherein the fastener sleeve defines a bore for removably receiving a fastener therethrough and further wherein the fastener sleeve has a proximal flange and one or more distal slits;
   a bit having an e-clip; and
   an installation guide operable to securely receive a bit through a central aperture wherein the installation guide has a first configuration for an offset installation and a second configuration for a flush installation.

## Claims

1. A fastener sleeve comprising a sleeve length from a proximal end to a distal end wherein the fastener sleeve defines a bore for removably receiving a fastener therethrough and further wherein the fastener sleeve has one or more longitudinal ribs on an exterior surface and the one or more longitudinal ribs terminate prior to the distal end of the fastener sleeve.

2. The fastener sleeve of claim **1,** wherein the fastener sleeve has at least one of a tapered interior diameter and a tapered exterior diameter.

3. The fastener sleeve of claim **1,** wherein the fastener sleeve has one or more distal slits.

4. The fastener sleeve of claim **3,** wherein the one or more distal slits has a slit length less than the fastener sleeve length.

5. The fastener sleeve of claim **1,** wherein the distal end of the fastener sleeve is operable to flex radially outward.

6. The fastener sleeve of claim **1,** wherein the fastener sleeve has a proximal flange.

7. The fastener sleeve of claim **6,** wherein the proximal flange of the fastener sleeve has a recess on a proximal surface operable to receive a fastener head.

8. The fastener sleeve of claim **6,** wherein the fastener sleeve further comprises a proximal sleeve body recess between a proximal end of the one or more ribs and a lower surface of the proximal flange.

9. A fastener sleeve comprising a sleeve length from a proximal end to a distal end wherein the fastener sleeve defines a bore for removably receiving a fastener therethrough and further wherein the fastener sleeve has a proximal flange and one or more distal slits.

10. The fastener sleeve of claim **9,** wherein the fastener sleeve has at least one of a tapered interior diameter and a tapered exterior diameter.

11. The fastener sleeve of claim **9,** wherein the fastener sleeve further comprises one or more longitudinal ribs having a tapered depth along a length of the one or more longitudinal ribs.

12. The fastener sleeve of claim **9,** wherein the one or more distal slits has a slit length less than the fastener sleeve length.

13. The fastener sleeve of claim **9,** wherein the distal end of the fastener sleeve is operable to flex radially outward.

14. The fastener sleeve of claim **9,** wherein the proximal flange has a recess on a proximal surface operable to receive a fastener head.

15. The fastener sleeve of claim **9,** wherein the fastener sleeve further comprises a proximal sleeve body recess between a proximal end of the one or more ribs and a lower surface of the proximal flange.

16. A fastener assembly comprising:
a fastener; and
a fastener sleeve with a sleeve length from a proximal end to a distal end wherein the fastener sleeve defines a bore for removably receiving a fastener therethrough and further wherein the fastener sleeve has one or more longitudinal ribs on an exterior surface and the one or more longitudinal ribs terminate prior to the distal end of the fastener sleeve.

17. The fastener assembly of claim **16,** wherein the fastener sleeve has at least one of a tapered interior diameter and a tapered exterior diameter.

18. The fastener assembly of claim **16,** wherein the fastener sleeve has one or more distal slits.

19. The fastener assembly of claim **18,** wherein the one or more distal slits has a slit length less than the fastener sleeve length.

20. The fastener assembly of claim **16,** wherein the distal end of the fastener sleeve is operable to flex radially outward.

21. The fastener assembly of claim **16,** wherein the fastener sleeve has a proximal flange.

22. The fastener assembly of claim **21,** wherein the proximal flange of the fastener sleeve has a recess on a proximal surface operable to receive a fastener head.

23. The fastener assembly of claim **21,** wherein the fastener sleeve further comprises a proximal sleeve body recess between a proximal end of the one or more ribs and a lower surface of the proximal flange.

24. A fastener assembly comprising:
a fastener; and
a fastener sleeve with a sleeve length from a proximal end to a distal end wherein the fastener sleeve defines a bore for removably receiving a fastener therethrough and further wherein the fastener sleeve has a proximal flange and one or more distal slits.

25. The fastener assembly of claim **24,** wherein the fastener sleeve has at least one of a tapered interior diameter and a tapered exterior diameter.

26. The fastener assembly of claim **24,** wherein the fastener sleeve further comprises one or more longitudinal ribs having a tapered depth along a length of the one or more longitudinal ribs.

27. The fastener assembly of claim **24,** wherein the one or more distal slits has a slit length less than the sleeve length.

28. The fastener assembly of claim **24,** wherein the distal end of the fastener sleeve is operable to flex radially outward.

29. The fastener assembly of claim **24,** wherein the proximal flange has a recess on a proximal surface operable to receive a fastener head.

30. The fastener assembly of claim **26,** wherein the fastener sleeve further comprises a proximal sleeve body recess between a proximal end of the one or more ribs and a lower surface of the proximal flange.

31. An installation method including the steps of:
providing a fastener assembly comprising a fastener having a fastener head and a threaded shaft, and a fastener sleeve;
extending the fastener sleeve of the fastener assembly through a hole in a target surface; and
driving the threaded shaft of the fastener into the target surface while also setting a spacing gap, whereby the threaded fastener is anchored in the target surface, and the spacing gap accommodates a deflection of the target surface.

32. The installation method of claim **31,** wherein a flange at a proximal end of the fastener sleeve is larger in diameter than the hole in the target surface.

33. The installation method of claim **31,** further including the step of providing an installation guide with a bit for engaging and rotating the fastener head, wherein the installation guide has an axially aligned receptacle dimensioned to releasably retain the fastener assembly to provide a known depth to achieve at least one of a flush installation of the fastener assembly and an offset installation of the fastener assembly.

34. The installation method of claim **31,** wherein the fastener assembly is installed through a hole from below, and the fastener is threaded into a floor joist or a roof truss.

35. The installation method of claim **31,** wherein the fastener has a fastener length greater than a sleeve length.

36. The installation method of claim **31,** wherein the fastener can translate within the fastener sleeve to accommodate a vertical deflection.

37. The installation method of claim **31,** wherein the fastener sleeve can translate within a hole to accommodate deflection without loading a wall section.

38. The installation method of claim **31,** further including the step of providing a mounting clip for a ceiling panel installed adjacent to a wall section, wherein the mounting clip is secured to an edge portion of the ceiling panel and spaced about a perimeter of the ceiling panel.

39. The installation method of claim **38,** further including the step of securing the mounting clip to a top header of the wall section wherein the mounting clip is being free of attachment to a floor joists or a roof truss.

40. The installation method of claim **31,** further including the step of forming a hole through a target surface.

41. A system comprising:
a fastener;
a fastener sleeve having a sleeve length from a proximal end to a distal end wherein the fastener sleeve defines a bore for removably receiving the fastener therethrough and further wherein the fastener sleeve has one or more longitudinal ribs on an exterior surface;
a bit having an e-clip; and
an installation guide operable to securely receive a bit through a central aperture wherein the installation guide has a first configuration for an offset installation and a second configuration for a flush installation.

42. The system of claim **41,** wherein the fastener sleeve has at least one of a tapered interior diameter and a tapered exterior diameter.

43. The system of claim **41,** wherein the fastener sleeve the one or more longitudinal ribs have a tapered depth along a length of the one or more longitudinal ribs.

44. The system of claim **41,** wherein the one or more longitudinal ribs terminate prior to the distal end of the fastener sleeve.

45. The system of claim **41,** wherein the fastener sleeve has one or more distal slits.

46. The system of claim **45,** wherein the one or more distal slits has a slit length less than the fastener sleeve length.

47. The system of claim **41,** wherein the distal end of the fastener sleeve is operable to flex radially outward.

48. The system of claim **41,** wherein the fastener sleeve has a proximal flange.

49. The system of claim **48,** wherein the proximal flange has a recess on a proximal surface operable to receive a fastener head.

50. The system of claim **48,** wherein the fastener sleeve further comprises a proximal sleeve body recess between a proximal end of the one or more ribs and a lower surface of the proximal flange.

51. The system of claim **41,** wherein the installation guide has a plurality of external ribs and a distal cavity.

52. A kit comprising:
a fastener;
a fastener sleeve having a sleeve length from a proximal end to a distal end wherein the fastener sleeve defines a bore for removably receiving the fastener therethrough further wherein the fastener sleeve has one or more tapered longitudinal ribs on an exterior surface and the one or more tapered longitudinal ribs terminate prior to the distal end of the sleeve;
a bit having an e-clip; and
an installation guide operable to securely receive a bit through a central aperture wherein the installation guide has a first configuration for an offset installation and a second configuration for a flush installation.

53. A kit comprising:
a fastener;
a fastener sleeve with a sleeve length from a proximal end to a distal end wherein the fastener sleeve defines a bore for removably receiving a fastener therethrough and further wherein the fastener sleeve has a proximal flange and one or more distal slits;
a bit having an e-clip; and
an installation guide operable to securely receive a bit through a central aperture wherein the installation guide has a first configuration for an offset installation and a second configuration for a flush installation.
